# EUROPÄISCHE PATENTSCHRIFT

(11) **EP 1 913 415 B1**
(45) Veröffentlichungstag und Bekanntmachung des Hinweises auf die Patenterteilung: **02.03.2011**
(21) Anmeldenummer: 06777462.0
(22) Anmeldetag: 26.06.2006
(51) Int. Cl.: G01S 7/481, G01S 17/08

(54) **ENTFERNUNGSMESSGERÄT UND VERFAHREN ZUM BEFESTIGEN EINER ELEKTROOPTISCHEN EINHEIT AN EINER LEITERTRÄGEREINHEIT**
DISTANCE MEASURING EQUIPMENT, AND METHOD FOR MOUNTING AN ELECTROOPTICAL UNIT ON A LEAD FRAME UNIT
APPAREIL DE TELEMETRIE ET PROCEDE POUR FIXER UNE UNITE ELECTRO-OPTIQUE A UNE UNITE SUPPORT DE CONDUCTEURS

(30) Priorität: 28.07.2005 DE 102005035417
(43) Veröffentlichungstag der Anmeldung: 23.04.2008
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); PAHUD, Cédric, CH-1110 Morges (CH); RENZ, Kai, 70771 Leinfelden-Echterdingen (DE)
(86) Internationale Anmeldenummer: PCT/EP2006/063547
(87) Internationale Veröffentlichungsnummer: WO 2007/012531

(56) Entgegenhaltungen:
- EP-A- 1 351 070
- WO-A-92/19984
- US-A- 5 812 893
- US-A1- 2003 218 737
- PATENT ABSTRACTS OF JAPAN Bd. 018, Nr. 178 (P-1717), 25. März 1994 (1994-03-25) & JP 05 341217 A (ASAHI OPTICAL CO LTD), 24. Dezember 1993 (1993-12-24)
- PATENT ABSTRACTS OF JAPAN Bd. 1997, Nr. 03, 31. März 1997 (1997-03-31) & JP 08 313774 A (NEC CORP), 29. November 1996 (1996-11-29)
- PATENT ABSTRACTS OF JAPAN Bd. 1996, Nr. 09, 30. September 1996 (1996-09-30) & JP 08 136843 A (CANON INC), 31. Mai 1996 (1996-05-31)

## Beschreibung

### Stand der Technik

Die Erfindung geht aus von einem Entfernnngsmessgerät, insbesondere einem als Handgerät ausgebildeten Laserentfernungsmesser, nach dem Oberbegriff des Anspruchs 1. Die Erfindung bezieht sich weiterhin auf ein Verfahren zum Befestigen einer elektrooptischeh Einheit an einer Leiterträgereinbeit nach dem Oberbegriff der Ansprüche 9 und 14

Aus der EP 1 351 070 A1 ist ein Entfernungsmesgerät mit einem Optikträger bekannt, an welchem optische Elemente zur Gestaltung eines Messsignals befestigt sind, und einer Leiterplatine, die im Optikträger angeordnet ist. Zur Erzeugung eines Messsignals ist das Entfernungsmessgerät mit einer Laser-Diode versehen, die mit der Leiterplatine elektrisch verbunden ist.

Aus der US 5 812 893 ist ein Abstandsmesser für eine Kamera bekannt, bei der die Sende- und Empfangseinrichtung auf zwei Seiten einer Leiterplatte angeordnet sind. Die Leiterplatte dient somit auch dazu, den Sendepfad der Vorrichtung der US 5 812 893 vom Empfangspfad optisch zu entkoppeln. Sendediode und Empfänger sind hierzu auf der Vorder- bzw. Rückseite einer Platine angeordnet, die derart in einem Gehäuse des Abstandsmessers eingebracht ist, dass zwei optisch getrennte Bauräume für den Sendepfad und den Empfangspfad des Abstandsmessers herausgebildet sind. Das Gehäuse der Vorrichtung der US 5 812 893, welches die Leiterplatte aufnimmt, dient zudem auch als Halterung für Kollimationslinsen und Umlenkspiegel von Sende- und Empfangspfad.

### Vorteile der Erfindung

Bezüglich des Eritfernungsmessgeräts geht die Erfindung von einem Entfernungsmessgerät aus, insbesondere einem als Handgerät ausgebildeten Laserentfernungsmesser, mit einer Leiterträgereinheit und einer elektrooptischen Einheit, die eine Sende- oder Empfangseinheit und eine Optikträgereinheit umfasst.

Es wird vorgeschlagen, dass die Optikträgereinheit an der Leiterträgereinhiet nach Anspruch 1 montiert ist. Dadurch können ein einfacher Aufbau und eine kompakte Ausgestaltung des Entfernungsmessgeräts erreicht werden, was insbesondere bei als Handgeräten ausgebildeten Entfernungsmessgeräten vorteilhaft ist. Wenn die Leiterträgereinheit als gemeinsames Trägerelement für die Sende- oder Empfangseinheit und die Optikträgereinheit ausgeführt wird, kann zusätzlich eine starre Verbindung zwischen der Optikträgereinheit und der Sende- oder Empfangseinheit erreicht werden, die vorteilhafterweise ebenfalls an der Leiterträgereinheit, z.B. durch elektrische Anschlüsse, befestigt ist. Die Optikträgereinheit ist vorteilhafterweise zum Tragen von zumindest einem optischen Teil, z.B. einer Linse, einer Blende, einem Trichter usw., vorgesehen und kann z.B. als Trägerhülse zur Aufnahme des optischen Teils ausgeführt sein. Die Optikträgereinheit ist von der Leiterträgereinheit gestützt, wobei die Optikträgereinheit separat von der Leiterträgereinheit ausgeführt oder einstückig an die Leiterträgereinheit angeformt sein kann, z.B. in Form einer Ausnehmung der Leiterträgereinheit, in welche ein optisches Teil eingefügt ist. In einer weiteren Möglichkeit kann die Optikträgereinheit einstückig an ein optisches Teil angeformt sein, z.B. als ein an eine Linse angeformtes Stützelement, das von der Leiterträgereinheit gestützt ist. Die elektrooptische Einheit mit der Sendeeinheit und der Optikträgereinheit, in der ein optisches Teil z.B. vormontiert ist, kann als Kollimationseinheit ausgebildet sein, die ganz auf der Leiterträgereinheit integriert werden kann.

Eine hohe Stabilität der Sende- oder Empfangseinheit lässt sich dadurch erreichen, dass die Sende- oder Empfangseinheit ein Gehäuse aufweist, das direkt stoffschlüssig an der Leiterträgereinheit befestigt ist. Außerdem können zusätzliche Trägerelemente für die Sende- oder Empfangseinheit vermieden werden. Eine elektrische Verbindung zwischen der Sende- oder Empfangseinheit und der Leiterträgereinheit kann direkt zwischen dem Gehäuse und einer elektrischen Leitung der Leiterträgereinheit über die stoffschlüssige Verbindung hergestellt sein, wodurch besonders kurze Strecken für einen elektrischen Strom zwischen der Sende- oder Empfangseinheit und der Leiterträgereinheit im Betrieb des Entfernungsmessgeräts erreicht werden können. Vorzugsweise ist eine Masseleitung der Sende- oder Empfangseinheit an eine Masseleitung der Leiterträgereinheit auf diese Weise angeschlossen. Durch die Herstellung eines elektrischen Anschlusses über kurze Strecken kann eine unerwünschte elektromagnetische Abstrahlung vermindert werden, die z.B. auf die Verwendung hochfrequent modulierter elektrischer Signale für eine Entfernungsmessung und deren Abstrahlung durch das Gehäuse und/oder durch zusätzliche metallische Trägerelemente für die Sende- oder Empfangseinheit zurückzuführen ist. Außerdem kann der Einsatz von gegen diese Abstrahlung vorgesehenen Abschirmungsmitteln vermieden werden, es können unerwünschte Interferenzen, z.B. zwischen einer Sendeelektronik und einer Empfangselektronik des Entfernungsmessgeräts, reduziert werden, und eine effektivere Übertragung von elektrischen Signalen zwischen der Sende- oder Empfangseinheit und der Leiterträgereinheit kann erreicht werden. Ferner kann eine Befestigung eines zusätzlichen Massenanschlussmittels der Sende- oder Empfangseinheit, z.B. eines Anschlussbeinchens, vermieden werden. Durch die stoffschlüssige Verbindung kann zusätzlich eine bei einem Betrieb entstehende Wärme der Sende- oder Empfangseinheit vorteilhaft abgeleitet werden. Die stoffschlüssige Verbindung kann als Lot ausgebildet sein. Alternativ ist ein Kleben der Sende- oder Empfangseinheit an die Leiterträgereinheit denkbar.

Vorzugsweise ist die Optikträgereinheit als tubusförmiges Element ausgebildet, wodurch ein vorteilhafter Schutz von in der Optikträgereinheit aufgenommenen optischen Teilen erreicht werden kann.

Eine besonders hohe Stabilität der Optikträgereinheit kann dadurch erzielt werden, dass die Optikträgereinheit mit ebener Anlagefläche auf der Leiterträgereinheit anliegt.

Ist die Sende- oder Empfangseinheit zumindest teilweise von der Optikträgereinheit umhüllt, kann ein vorteilhafter Schutz der Sende- oder Empfangseinheit erreicht werden.

Es wird außerdem vorgeschlagen, dass in der Umhüllung ein absatzförmiges Lichtabschwächelement angeordnet ist. Dadurch kann eine unerwünschte Abstrahlung durch einen für eine Justage der Optikträgereinheit relativ zur Sende- oder Empfangseinheit bedingten Justagespalt zwischen der Sende- oder Empfangseinheit und der Optikträgereinheit vermindert werden.

Vorzugsweise ist die Optikträgereinheit aus Kunststoff hergestellt. Dadurch können eine vorteilhafte elektrische Isolierung der Optikträgereinheit von der Leiterträgereinheit und eine damit verbundene Reduzierung von elektromagnetischen Interferenzen zwischen einer Sendeelektronik und einer Empfangselektronik des Entfernungsmessgeräts erzielt werden. Außerdem kann ein Versetzen eines Brennpunkts der Sende- oder Empfangsoptik aufgrund einer Variation eines Brechungsindexes mit der Temperatur durch eine Ausdehnung der Optikträgereinheit ausgeglichen werden. Ferner kann die Optikträgereinheit z.B. einstückig an eine Kunststofflinse angeformt ausgebildet sein.

In einer weiteren Ausgestaltung der Erfindung ist die Optikträgereinheit an einer Klebestelle an die Leiterträgereinheit geklebt. Es kann dadurch bei einer Montage des Entfernungsmessgeräts eine sichere Befestigung der Optikträgereinheit an der Leiterträgereinheit erzielt werden, wobei eine Wärmezufuhr und eine damit verbundene mögliche Beschädigung der Optikträgereinheit vermieden werden können.

Ist die Leiterträgereinheit an der Klebestelle für UV-Strahlung durchlässig, kann eine vorteilhafte berührungslose Befestigung der Optikträgereinheit an der Leiterträgereinheit erreicht werden, indem ein an der Klebestelle aufgetragenes Klebemittel durch eine UV-Durchstrahlung der Leiterträgereinheit gehärtet wird. Unter "Durchlässigkeit" soll in diesem Zusammenhang insbesondere eine Durchlässigkeit verstanden werden, die mindestens 10% und bevorzugt größer als 30% ist, insbesondere größer als 50%.

Bezüglich des Verfahrens geht die Erfindung aus von einem Verfahren zum Befestigen einer elektrooptischen Einheit an einer Leiterträgereinheit bei einer Herstellung eines Entfernungsmessgeräts, wobei die elektrooptische Einheit eine Sende- oder Empfangseinheit und eine Optikträgereinheit aufweist.

Es wird vorgeschlagen, dass zunächst die Sende- oder Empfangseinheit und dann die Optikträgereinheit an der Leiterträgereinheit befestigt wird. Der Vorteil dieses Verfahrens liegt darin, dass die Sende- oder Empfangseinheit in einer Position befestigt werden kann, die gezielt für eine effektive mechanische Befestigung an der Leiterträgereinheit, für einen effektiven elektrischen Anschluss mit der Leiterträgereinheit und/oder für ein Senden eines Signals mit einer gewünschten Ausrichtung und einer gewünschten Höhe relativ zur Leiterträgereinheit vorbestimmt ist.

Um ein Befestigen der Sende- oder Empfangseinheit in einer solchen gewünschten Position präzise erreichen zu können, wird die Sende- oder Empfangseinheit bei der Befestigung der Sende- oder Empfangseinheit vorteilhaft in einer vorbestimmten Soll-Position gehalten. Außerdem können bei einem Bestimmen der Soll-Position im Vorfeld des Befestigungsverfahrens mögliche Bewegungen der Sende- oder Empfangseinheit nach dem Befestigungsprozess, wie z.B. Spannungen oder Entspannungen bei einem Kühlungsprozess nach einem Löten oder bei einem Härtungsprozess, berücksichtigt werden.
Vorteilhafterweise wird an einer Klebestelle ein Klebemittel aufgetragen und die Optikträgereinheit wird an der Klebestelle an der Leiterträgereinheit justierbar angeordnet. Dadurch kann bei einem aufgetragenen Klebemittel eine relativ zur Sende- oder Empfangseinheit justierte Position der Optikträgereinheit flexibel und präzise erreicht werden, in welcher die Optikträgereinheit dann direkt befestigt werden kann.

Ein unerwünschtes Verstellen der in einer justierten Position angeordneten Optikträgereinheit bei deren Befestigung an der Leiterträgereinheit kann dadurch vermieden werden, dass die Optikträgereinheit durch einen Härtungsvorgang des Klebemittels an die Leiterträgereinheit in einer justierten Position fixiert wird. Alternativ sind weitere berührungslose Befestigungsverfahren der Optikträgereinheit an der Leiterträgereinheit, wie z.B. Ultraschallschwèißen oder Laserschweißen, auch denkbar.

Des Weiteren wird vorgeschlagen, dass bei einer befestigten Sende- oder Empfangseinheit die Optikträgereinheit justiert wird. Dadurch können in der Optikträgereinheit vormontierte optische Teile durch die Justage der Optikträgereinheit gleichzeitig relativ zu der Sende- oder Empfangseinheit justiert werden, wodurch eine aufwändige Justage einzelner optischer Teile vermieden werden kann.

Es wird ein weiteres Befestigungsverfahren vorgeschlagen, bei dem zunächst die Optikträgereinheit und dann die Sende- oder Empfangseinheit an der Leiterträgereinheit befestigt wird. Es kann die Justage der Optikträgereinheit entfallen, wodurch ein Herstellaufwand bei einem Zusammenbau des Entfernungsmessgeräts reduziert werden kann.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Ein Entfernungsmessgerät in einer perspektivischen Ansicht mit einer Leiterträgereinheit und zwei elektrooptischen Einheiten,
- Fig. 2: die Leiterträgereinheit und eine der elektrooptischen Einheiten aus Figur 1 mit einer Sendeeinheit und einer Optikträgereinheit in einer Draufsicht,
- Fig. 3: die Leiterträgereinheit, die Sendeeinheit und die Optikträgereinheit in einer Schnittansicht,
- Fig. 4: die Optikträgereinheit und die Leiterträgereinheit in einer Seitenansicht,
- Fig. 5: die Leiterträgereinheit, die Sendeeinheit und eine alternative Optikträgereinheit mit einem Vorsprung in einer Schnittansicht und
- Fig. 6: den Vorsprung der Optikträgereinheit aus Figur 5 mit einem Lichtabschwächelement in einer Schnittansicht.

### Beschreibung der Ausführungsbeispiele

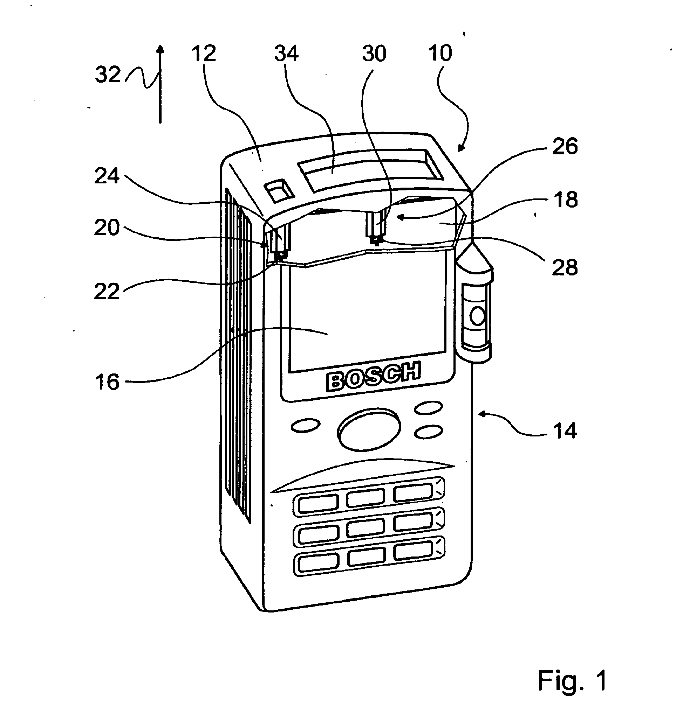

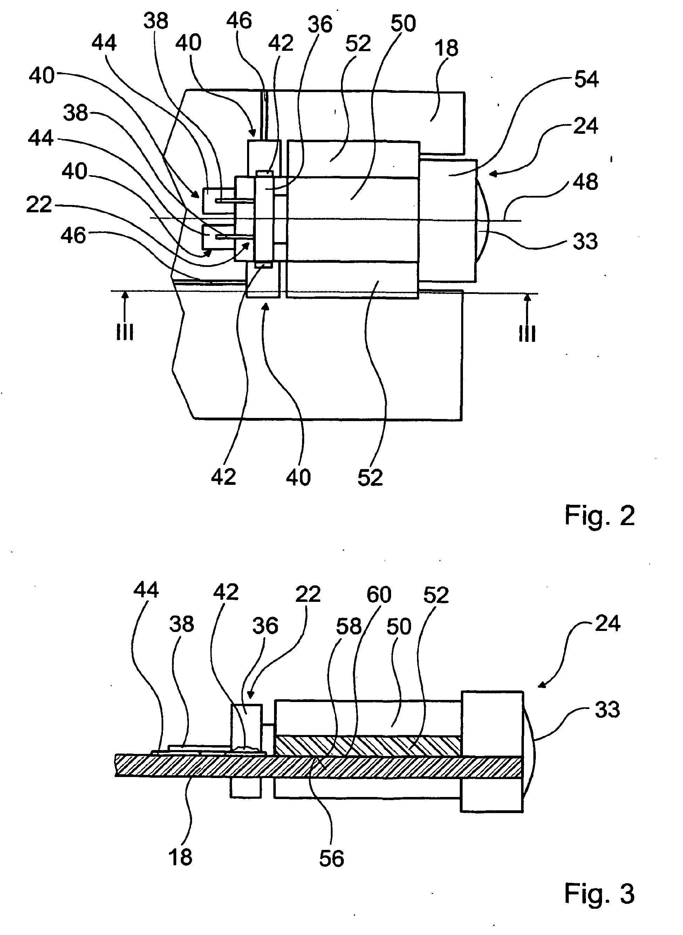

Figur 1 zeigt ein als Laserentfernungsmesser 10 ausgeführtes Entfernungsmessgerät. Dieses weist ein Gehäuse.12, Betätigungselemente 14 zum Ein- und Ausschalten des Entfernungsmessgeräts und zum Starten bzw. Konfigurieren eines Messvorgangs sowie einen Display 16 auf. Innerhalb des Gehäuses 12 ist eine als Leiterplatte ausgebildete Leiterträgereinheit 18 angeordnet, an welcher eine elektrooptische Einheit 20 befestigt ist. Diese weist eine als Laserdiode ausgebildete Sendeeinheit 22 und eine Optikträgereinheit 24 auf. An der Leiterträgereinheit 18 ist eine weitere elektrooptische Einheit 26 angeordnet, die eine als Fotodiode ausgebildete Empfangseinheit 28 und eine Optikträgereinheit 30 umfasst. Zur Messung eines Abstands des Laserentfernungsmessers 10 zu einem entfernten Gegenstand wird im Betrieb des Laserentfernungsmessers 10 ein Sendesignal in Form eines Laserstrahls von der Sendeeinheit 22 in einer parallel zur Leiterträgereinheit 18 ausgerichteten Signalrichtung 32 erzeugt und von einer in der Optikträgereinheit 24 angeordneten Kollimationslinse 33 (Figur 2) kollimiert. Der von einer Oberfläche des entfernten Gegenstands reflektierte Laserstrahl wird über eine Fokussierlinse 34 von der Empfangseinheit 28 als Empfangssignal empfangen und zu einem elektrischen Signal umgewandelt. Aus einem Vergleich des Sendesignals mit dem Empfangssignal wird der gesuchte Abstand ermittelt. Zur Steuerung der Sendeeinheit 22 und der Empfangseinheit 28, zum Bearbeiten des Empfangsignals sowie zum Auswerten des Abstands zum entfernten Objekt sind weitere, der Übersichtlichkeit halber nicht dargestellte elektronische Bauteile an der Leiterträgereinheit 18 angeordnet.

Die Leiterträgereinheit 18, die Sendeeinheit 22 und die Optikträgereinheit 24 sind in einer Detailansicht in Figur 2 dargestellt. Die als Laser-Diode ausgebildete Sendeeinheit 22 umfasst ein Gehäuse 36 und zwei als Beinchen ausgeführte elektrische Anschlüsse 38 zur Versorgung der Sendeeinheit 22 mit elektrischem Strom. Zum Befestigen der Sendeeinheit 22 ist die Oberfläche der Leiterträgereinheit 18 mit vier Lötflächen 40 versehen, die mit als Befestigungsmitteln 42, 44 ausgebildeten Lotlegierungen beschichtet sind. Die elektrischen Anschlüsse 38 sind durch das Befestigungsmittel 44 an der Leiterträgereinheit 18 befestigt, wobei die Sendeeinheit 22 über das Befestigungsmittel 44 mit der Leiterträgereinheit 18 elektrisch verbunden ist. Das Gehäuse 36 ist durch das Befestigungsmittel 42 direkt an der Leiterträgereinheit 18 stoffschlüssig befestigt und über dieses Befestigungsmittel 42 an eine Masseleitung 46 der Leiterträgereinheit 18 elektrisch angeschlossen. Die Optikträgereinheit 24, die in einer relativ zur Sendeeinheit 22 justierten Position an der Leiterträgereinheit 18 befestigt ist, ist als tubusförmiges Element ausgebildet, welches einen um eine optische Achse 48 zentrierten rohrförmigen Grundkörper 50 sowie zwei an diesen Grundkörper 50 einstückig angeformte Flügelelemente 52 aufweist. Über diese Flügelelemente 52, die an der Leiterträgereinheit 18 anliegen, ist die Optikträgereinheit 24 von der Leiterträgereinheit 18 gestützt. Des Weiteren umfasst die Optikträgereinheit 24 einen Fortsatz 54, in dem die Kollimationslinse 33 angeordnet ist.

Die Anordnung der Sendeeinheit 22 und der Optikträgereinheit 24 auf der Leiterträgereinheit 18 ist in einer Schnittansicht entlang der Achse III in Figur 2 parallel zur optischen Achse 48 in Figur 3 dargestellt. Zu erkennen sind das Gehäuse 36 sowie einer der elektrischen Anschlüsse 38 der Sendeeinheit 22, die über das Befestigungsmittel 42 bzw. 44 an der Leiterträgereinheit 18 befestigt sind. Die Flügelelemente 52 der Optikträgereinheit 24 liegen mit einer im wesentlichen ebenen Anlagefläche 56 an der Leiterträgereinheit 18 an und sind an zwei Klebestellen 58 beidseitig des Grundkörpers 50 durch ein Klebemittel 60 an die Leiterträgereinheit 18 geklebt. Auf der Seite der Anlagefläche 56 können die Flügelelemente 52 zusätzlich auch Ausnehmungen, bzw. Aufnahmen, wie beispielsweiseine oder mehrere Auskehlungen, aufweisen, in die überschüssiges Klebemittel verdrängt werden kann, um sicher zu stellen, dass die Flügelelemente 52 eben auf der Leiterträgereinheit 18 aufliegen. Alternativerweise könnten solche Ausnehmungen auch auf der Leiterträgereinheit 18 ausgebildet sein.

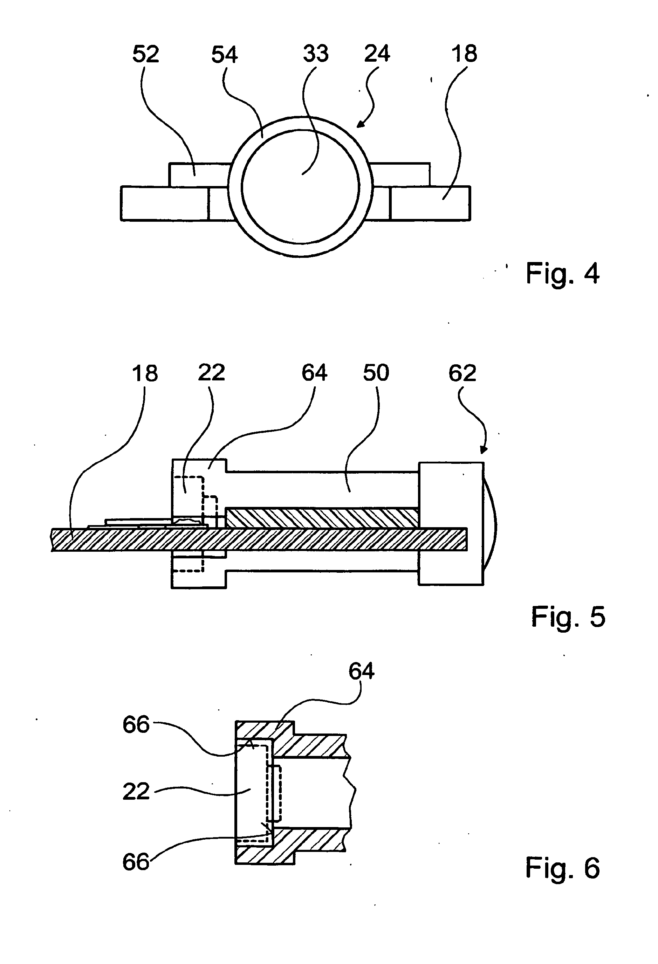

Figur 4 zeigt die Anordnung der Optikträgereinheit 24 auf der Leiterträgereinheit 18 radial zur optischen Achse 48. Zu erkennen sind der Fortsatz 54, in dem die Kollimationslinse 33 angeordnet ist, und die Flügelelemente 52, die an der Leiterträgereinheit 18 anliegen und über welche die Optikträgereinheit 24 gestützt ist.
In Figur 5 sind in der Schnittansicht von Figur 2 die Leiterträgereinheit 18, die Sendeeinheit 22 und eine alternative Optikträgereinheit 62 dargestellt. In dieser Ausführungsform weist diese zusätzlich einen an den Grundkörper 50 angeformten Vorsprung 64 auf, der die Sendeeinheit 22 teilweise umhüllt.

Eine Schnittansicht des Vorsprungs 64 der Optikträgereinheit 62 ist in Figur 6 gezeigt. Eine der Sendeeinheit 22 zugewandte innere Fläche des Vorsprungs 64 ist der Außenkontur der Sendeeinheit 22 entsprechend ausgestaltet und als absatzförmiges Lichtabschwächelement 66 ausgebildet. Zur Abschwächung eines im Inneren des Grundkörpers 50 gestreuten Laserstrahls ist die innere Fläche mit einem lichtabsorbierenden Mittel versehen.

In den oben betrachteten Ausführungsbeispielen sind die Empfangseinheit 28 und die Optikträgereinheit 30 der weiteren elektrooptischen Einheit 26 auf die gleiche Art und Weise aufgebaut und an der Leiterträgereinheit 18 befestigt, wie anhand der Figuren 2 bis 6 für die elektrooptische Einheit 20 beschrieben wurde. Daher wird die Beschreibung für die weitere elektrooptische Einheit 26 nicht wiederholt und es werden für entsprechende Teile der Empfangseinheit 28 und der Optikträgereinheit 30 keine neuen Bezugszeichen vergeben.

Bei einer Herstellung des Laserentfernungsmessers 10 wird die elektrooptische Einheit 20 an der Leiterträgereinheit 18 befestigt. Die Sendeeinheit 22 der elektrooptischen Einheit 20 bzw. das Gehäuse 36 wird hierbei zunächst über ein Hilfswerkzeug in eine vorbestimmte Soll-Position gefahren. Hierfür wird eine Ist-Position der Sendeeinheit 22, insbesondere eine Höhe der Sendeeinheit 22 relativ zur Leiterträgereinheit 18, mithilfe einer optischen Vermessung erfasst. Die Sendeeinheit 22 wird verfahren, bis die Ist-Position mit einer vorbestimmten Soll-Position, in der die Sendeeinheit 22 in den Figuren 2, 3 und 5 positioniert ist, übereinstimmt. Das Gehäuse 36 und die elektrischen Anschlüsse 38 werden an den Lötflächen 40 gelötet, wobei die Sendeeinheit 22 durch das Hilfswerkzeug in der erreichten Soll-Position weiter gehalten wird. Anschließend wird das Klebemittel 60 an den Klebestellen 58 auf der Leiterträgereinheit 18 aufgetragen und die Optikträgereinheit 24 wird an den Klebestellen 58 an der Leiterträgereinheit 18 justierbar angeordnet. Die Sendeeinheit 22 wird eingeschaltet, wobei ein Laserstrahl erzeugt wird, dessen Ausrichtung zur Leiterträgereinheit 18 sowie dessen Divergenz durch Messeinrichtungen vermessen werden. Anhand von erfassten Vermessungsdaten wird die Optikträgereinheit 24 relativ zur Sendeeinheit 22 justiert, bis diese Daten vorbestimmte Sollwerte aufweisen bzw. bis der Laserstrahl eine gewünschte Ausrichtung zur Leiterträgereinheit 18 und eine gewünschte Form aufweist. Anschließend wird die Optikträgereinheit 24 in einer justierten Position, in der die Optikträgereinheit 24 in den Figuren 2 und 3 positioniert ist, an der Leiterträgereinheit 18 befestigt, und zwar, indem das Klebemittel 60 durch eine UV-Durchstrahlung der Leiterträgereinheit 18, 'die an den Klebestellen 58 für UV-Strahlung durchlässig ist, gehärtet wird.

Ein weiteres Befestigungsverfahren der elektrooptischen Einheit 20 sieht vor, zunächst die Optikträgereinheit 24 in einer vorbestimmten Soll-Position an die Leiterträgereinheit 18 zu kleben, dann die Sendeeinheit 22 relativ zur Optikträgereinheit 24 zu justieren und in einer justierten Position an die Leiterträgereinheit 18 zu löten. Eine Befestigung der Optikträgereinheit 62 an der Leiterträgereinheit 18 erfolgt auf die Art und Weise, die für die Optikträgereinheit 24 beschrieben wird. Ferner wird die elektrooptische Einheit 26 an der Leiterträgereinheit 18 vorzugsweise mithilfe eines der oben für die elektrooptische Einheit 20 beschriebenen Befestigungsverfahren befestigt.

## Patentansprüche

1. Entfernungsmessgerät, insbesondere als Handgerät ausgebildeter Laserentfernungsmesser (10), mit einer Leiterträgereinheit (18) und einer elektrooptischen Einheit (20, 26), die eine Sende- oder Empfangseinheit (22, 28) und eine Optikträgereinheit (24, 30, 62) umfasst, **dadurch gekennzeichnet, dass** die Leiterträgereinheit (18) eine Ausnehmung aufweist und die Optikträgereinheit auf gegenüberliegenden Seiten im wesentlichen ebene Anlageflächen aufweist,
wobei die Optikträgereinheit in der Ausnehmung montiert ist, indem diese Anlageflächen auf der Leiterträgereinheit anliegen.

2. Entfernungsmessgerät nach Anspruch 1, **dadurch gekennzeichnet, dass** die Sende- oder Empfangseinheit (22, 28) ein Gehäuse (36) aufweist, das direkt stoffschlüssig an der Leiterträgereinheit (18) befestigt ist.

3. Entfernungsmessgerät nach Anspruch 1 oder 2, **dadurch gekennzeichnet, dass** die Optikträgereinheit (24, 30, 62) als tubusförmiges Element ausgebildet ist.

4. Entfernungsmessgerät nach einem der vorhergehenden Ansprüche, **dadurch gekennzeichnet, dass** die Sende- oder Empfangseinheit (22, 28) zumindest teilweise von der Optikträgereinheit (62) umhüllt ist.

5. Entfernungsmessgerät nach Anspruch 4, **dadurch gekennzeichnet, dass** in der Umhüllung ein absatzförmiges Lichtabschwächelement (66) angeordnet ist.

6. Entfernungsmessgerät nach einem der vorhergehenden Ansprüche, **dadurch gekennzeichnet, dass** die Optikträgereinheit (24, 30, 62) aus Kunststoff hergestellt ist.

7. Entfernungsmessgerät nach einem der vorhergehenden Ansprüche, **dadurch gekennzeichnet, dass** die Optikträgereinheit (24, 30, 62) an zumindest einer Klebestelle (58) an die Leiterträgereinheit (18) geklebt ist.

8. Entfernungsmessgerät nach Anspruch 7, **dadurch gekennzeichnet, dass** die Leiterträgereinheit (18) an der Klebestelle (58) für UV-Strahlung durchlässig ist.

9. Verfahren zum Befestigen einer elektrooptischen Einheit (20, 26) an einer Leiterträgereinheit (18) bei der Herstellung eines Entfernungsmessgeräts, nach einem der Ansprüche 1-8 30, **dadurch gekennzeichnet, dass** zunächst die Sende- oder Empfangseinheit (22, 28) und dann die Optikträgereinheit (24, 30, 62) an der Leiterträgereinheit (18) befestigt wird.

10. Verfahren nach Anspruch 9, **dadurch gekennzeichnet, dass** bei der Befestigung der Sende- oder Empfangseinheit (22, 28) die Sende- oder Empfangseinheit (22, 28) in einer vorbestimmten Soll-Position gehalten wird.

11. Verfahren nach Anspruch 9 oder 10, **dadurch gekennzeichnet, dass** an einer Klebestelle (58) ein Klebemittel (60) aufgetragen wird und die Optikträgereinheit (24, 30, 62) an der Klebestelle (58) an der Leiterträgereinheit (18) justierbar angeordnet wird.

12. Verfahren nach Anspruch 11, **dadurch gekennzeichnet, dass** die Optikträgereinheit (24, 30, 62) durch einen Härtungsvorgang des Klebemittels (60) an die Leiterträgereinheit (18) in einer justierten Position fixiert wird.

13. Verfahren nach einem der Ansprüche 9 bis 12, **dadurch gekennzeichnet, dass** bei einer befestigten Sende- oder Empfangseinheit (22, 28) die Optikträgereinheit (24, 30, 62) justiert wird.

14. Verfahren zum Befestigen einer elektrooptischen Einheit (20, 26) an einer Leiterträgereinheit (18) bei der Herstellung eines Entfernungsmessgeräts nach einem der Ansprüche 1-8, **dadurch gekennzeichnet, dass** zunächst die Optikträgereinheit (24, 30, 62) und dann die Sende- oder Empfangseinheit (22, 28) an der Leiterträgereinheit (18) befestigt wird.

## Claims

1. Distance measuring device, in particular a laser range finder (10) designed as a hand held appliance, having a conductor support unit (18) and an electrooptical unit (20, 26) which comprises a transceiver unit (22, 28) and an optics support unit (24, 30, 62), **characterized in that** the conductor support unit (18) has a recess, and the optics support unit has on opposite sides substantially flat seating surfaces, the optics support unit being mounted in the recess by having said seating surfaces bear against the conductor support unit.

2. Distance measuring device according to Claim 1, **characterized in that** the transceiver unit (22, 28) has a housing (36) which is fastened directly on the conductor support unit (18) in an integral fashion.

3. Distance measuring device according to Claim 1 or 2, **characterized in that** the optics support unit (24, 30, 62) is designed as a tubular element.

4. Distance measuring device according to one of the preceding claims, **characterized in that** the transceiver unit (22, 28) is at least partially covered by the optics support unit (62).

5. Distance measuring device according to Claim 4, **characterized in that** a shoulder-shaped light attenuation element (66) is arranged in the covering.

6. Distance measuring device according to one of the preceding claims, **characterized in that** the optics support unit (24, 30, 62) is produced from plastic.

7. Distance measuring device according to one of the preceding claims, **characterized in that** the optics support unit (24, 30, 62) is adhesively bonded onto the conductor support unit (18) at at least one adhesion site (58).

8. Distance measuring device according to Claim 7, **characterized in that** at the adhesion site (58) the conductor support unit (18) is transparent to UV radiation.

9. Method for fastening an electrooptical unit (20, 26) on a conductor support unit (18) when producing a distance measuring device according to one of Claims 1-8, **characterized in that** firstly the transceiver unit (22, 28) and then the optics support unit (24, 30, 62) are fastened on the conductor support unit (18).

10. Method according to Claim 9, **characterized in that** the transceiver unit (22, 28) is held in a predetermined desired position during the fastening of the transceiver unit (22, 28).

11. Method according to Claim 9 or 10, **characterized in that** an adhesive (60) is applied at an adhesion site (58) and the optics support unit (24, 30, 62) is adjustably arranged at the adhesion site (58) on the conductor support unit (18).

12. Method according to Claim 11, **characterized in that** the optics support unit (24, 30, 62) is fixed on the conductor support unit (18) in an adjusted position by a curing process of the adhesive (60).

13. Method according to one of Claims 9 to 12, **characterized in that** the optics support unit (24, 30, 62) is adjusted in the case of fastened transceiver unit (22, 28).

14. Method for fastening an electrooptical unit (20, 26) on a conductor support unit (18) when producing a distance measuring device according to one of Claims 1-8, **characterized in that** firstly the optics support unit (24, 30, 62) and then the transceiver unit (22, 28) are fastened on the conductor support unit (18).

## Revendications

1. Appareil de mesure de distance, en particulier dispositif (10) de mesure de distance par laser configuré sous la forme d'un appareil manuel présentant :
une unité (18) de support de conducteurs et une unité électrooptique (20, 26) qui comprend une unité d'émission ou une unité de réception (22, 28) et une unité (24, 30, 62) de support d'optique,
**caractérisé en ce que**
l'unité (18) de support de conducteur présente un logement et l'unité de support d'optique présente sur des côtés opposés des surfaces de pose essentiellement planes et
**en ce que** l'unité de support d'optique est montée dans la découpe en posant ses surfaces de pose sur l'unité de support de conducteurs.

2. Appareil de mesure de distance selon la revendication 1, **caractérisé en ce que** l'unité d'émission ou l'unité de réception (22, 28) présentent un boîtier (36) qui est fixé directement et en correspondance de matière sur l'unité (18) de support de conducteurs.

3. Appareil de mesure de distance selon les revendications 1 ou 2, **caractérisé en ce que** l'unité (24, 30, 62) de support d'optique est configurée comme élément de forme tubulaire.

4. Appareil de mesure de distance selon l'une des revendications précédentes, **caractérisé en ce que** l'unité d'émission ou l'unité de réception (22, 28) sont entourées au moins en partie par l'unité (62) du support d'optique.

5. Appareil de mesure de distance selon la revendication 4, **caractérisé en ce qu'**un élément (66) d'atténuation de la lumière en forme d'appendice est disposé dans l'enveloppe.

6. Appareil de mesure de distance selon l'une des revendications précédentes, **caractérisé en ce que** l'unité (24, 30, 62) de support d'optique est réalisée en matière synthétique.

7. Appareil de mesure de distance selon l'une des revendications précédentes, **caractérisé en ce que** l'unité (24, 30, 62) de support d'optique est collée en au moins un placement de collage (58) sur l'unité (18) de support de conducteurs.

8. Appareil de mesure de distance selon la revendication 7, **caractérisé en ce qu'**à l'emplacement de collage (58), l'unité (18) de support de conducteurs est transparente au rayonnement UV.

9. Procédé de fixation d'une unité électrooptique (20, 26) sur une unité (18) de support de conducteurs dans la fabrication d'un appareil de mesure de distance selon l'une des revendications 1 à 8,
**caractérisé en ce que**
l'unité d'émission ou l'unité de réception (22, 28) sont d'abord fixées sur l'unité (18) de support de conducteurs avant que l'unité (24, 30, 62) de support d'optique y soit fixée.

10. Procédé selon la revendication 9, **caractérisé en ce que** l'unité d'émission ou l'unité de réception (22, 28) sont maintenues dans une position de consigne prédéterminée lors de la fixation de l'unité d'émission ou de l'unité de réception (22, 28).

11. Procédé selon les revendications 9 ou 10, **caractérisé en ce qu'**un adhésif (60) est appliqué sur un emplacement de collage (58) et **en ce que** l'unité (24, 30, 62) de support d'optique est disposée à l'emplacement de collage (58) sur l'unité (18) de support de conducteur de manière ajustable.

12. Procédé selon la revendication 11, **caractérisé en ce que** l'unité (24, 30, 62) de support d'optique est fixée par une opération de durcissement de l'adhésif (60) en une position ajustée sur l'unité (18) de support de conducteurs.

13. Procédé selon l'une des revendications 9 à 12, **caractérisé en ce que** lorsque l'unité d'émission ou l'unité de réception (22, 28) sont fixées, l'unité (24, 30, 62) de support d'optique est ajustée.

14. Procédé de fixation d'une unité électrooptique (20, 26) sur une unité (18) de support de conducteurs lors de la fabrication d'un appareil de mesure de distance selon l'une des revendications 1 à 8, **caractérisé en ce que** l'unité (24, 30, 62) de support d'optique est d'abord fixée sur l'unité (18) de support de conducteurs avant d'y fixer l'unité d'émission ou l'unité de réception (22, 28).
